(19) Europäisches Patentamt
European Patent Office
Office européen des brevets

(11) EP 1 838 796 B1

(12) **EUROPEAN PATENT SPECIFICATION**

(45) Date of publication and mention of the grant of the patent:
**15.07.2009 Bulletin 2009/29**

(21) Application number: **06702881.1**

(22) Date of filing: **18.01.2006**

(51) Int Cl.:
***C09J 133/08*** *(2006.01)* ***H01J 17/00*** *(2006.01)*

(86) International application number:
**PCT/KR2006/000198**

(87) International publication number:
**WO 2006/078119 (27.07.2006 Gazette 2006/30)**

# (54) ACRYLIC PRESSURE-SENSITIVE ADHESIVE COMPOSITION WITH GOOD RE-WORKABILITY

DRUCKEMPFINDLICHE ACRYLKLEBSTOFFZUSAMMENSETZUNG MIT GUTER WIEDERVERARBEITBARKEIT

COMPOSITION D'ADHESIF ACRYLIQUE AUTOCOLLANT A BONNE APTITUDE AU REFAÇONNAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.01.2005 KR 20050005029**

(43) Date of publication of application:
**03.10.2007 Bulletin 2007/40**

(73) Proprietor: **LG Chem. Ltd.**
**Youngdungpo-gu**
**Seoul 150-721 (KR)**

(72) Inventors:
- **CHANG, Suk Ky**
  **Daejeon Metropolitan City, 305-721 (KR)**
- **HAN, In Cheon**
  **Seoul 138/160 (KR)**
- **CHO, Hyun Ju**
  **Gyeongsangnam-do, 621-010 (KR)**
- **CHOI, Hyun Seok**
  **Daejeon Metropolitan City, 305-340 (KR)**
- **PARK, Sang Hyun,**
  **304-2004 Yeolmae Maeul Apt.**
  **Daejeon Metropolitan City, 305-330 (KR)**
- **KIM, Jung Doo,**
  **106-705, Sejong Apt.**
  **Daejeon Metropolitan City, 305-390 (KR)**
- **LEE, Su Rim,**
  **3-321, Lg Chemistry Dormitory**
  **Daejeon Metropolitan City, 305-340 (KR)**

(74) Representative: **HOFFMANN EITLE**
**Patent- und Rechtsanwälte**
**Arabellastraße 4**
**81925 München (DE)**

(56) References cited:
**EP-A- 1 484 347**
**WO-A-20/06078122**
**WO-A1-20/04061034**
**JP-A- 07 331 206**
**JP-A- 11 065 464**
**JP-A- 2002 372 619**
**US-B1- 6 171 422**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 838 796 B1

## Description

## Technical Field

The present invention relates to an acrylic pressure-sensitive adhesive composition and an adhesive sheet which exhibit excellent re-workability, durability, and reliability. This application claims the benefit of the filing date of Korean Patent Application No. 10-2005-0005029, filed on January 19, 2005, in the Korean Intellectual Property Office, the disclosure of which is incorporated herein in its entirety by reference.

## Background Art

Recently, while expectations for high-quality/large-sized televisions including digital televisions have trended upward, developments for satisfying such expectations in the fields of cathode ray tubes (CRTs), liquid crystal displays (LCDs), plasma displays, etc., have been actively conducted.
Although the CRT, which is conventionally used as a display of a television, has superior resolution and screen quality, its length and weight are undesirably increased in proportion to an increase in the size of screen, and thus, it is unsuitable for use in a large screen of 40 inches or more.
In addition, the LCD is advantageous because it has low power consumption and excellent driving voltage, but suffers because it faces technical difficulties in fabricating a large screen and is limited in viewing angle.
However, the plasma display is easily applied to a large screen, and therefore, a product of 70 inches or more has already been developed. A plasma display panel (PDP) may be structured by forming barrier ribs on a lower plate to section the lower plate, forming red, green, and blue phosphor layers in grooves of the barrier ribs, disposing an upper plate in parallel onto the lower plate to cause electrodes of the upper plate and electrodes of the lower plate to face each other, and introducing and sealing a discharge gas. Such a PDP is operated in a manner such that an image is provided using light emitted from the plasma occurring upon electrical discharge of the gas. The plasma generated by the electrical discharge is separated by the minute barrier ribs, such that unit cells are formed.
For reference, FIG. 1 illustrates the general cross-sectional structure of a PDP. As shown in FIG. 1, the reference number 11 designates a case, 12 designates a driving circuit board, 13 designates a panel assembly, 14 designates a PDP filter, and 15 designates a cover.
The PDP filter functions to compensate for a decrease in the purity of the red spectrum with a unique orange spectrum that is emitted from the panel, and to shield near infrared rays causing malfunction of a remote controller and electromagnetic waves harmful to the human body. In order to realize the above functions, the PDP filter is composed of layers having corresponding functions, for example, an antireflection layer, a color-compensation layer for compensating the color purity, a near infrared absorption layer, an electromagnetic shielding layer, etc. Such layers having the corresponding functions are provided in a film form and are generally laminated using an adhesive. Typically, the PDP filter is attached to the upper glass plate of the PDP using a pressure-sensitive adhesive layer provided on one surface of the PDP filter.
In this way, when the PDP filter having the pressure-sensitive adhesive layer provided thereon is attached to the upper glass plate of the PDP, and if the filter is inappropriately positioned or impurities are inserted between the filter and the upper glass plate of the PDP, a separation process is required. Thus, the filter should be able to be easily removed from the upper glass plate and also should be able to be peeled without transfer of the adhesive layer to the glass plate. In addition, when the PDP filter is in a state of being attached to the upper glass plate of the PDP, it should have high reliability so as to prevent generation of air bubbling or peeling under high temperature under high temperature and high humidity. Generally, after the PDP filter is attached to the upper plate of the PDP module, processes such as cleaning of electrodes and pressing of heat sink are conducted, followed by conducting an image inspection process and a product outgoing. Consequently, during the time subsequent to the process of attaching the PDP filter to the upper plate of the PDP module to the time before the aging process and outgoing process are done, a separation process in which the transfer of the adhesive to the upper plate of the PDP module is prevented may be required at any time, and durability and reliability should be satisfied thereafter.
In recent years, according to the increase in the size and performance of PDPs, requirements for the above-mentioned performance are further increasing.
As disclosed in Japanese Patent Laid-open Publication No. Hei. 11-65464, a PDP filter having an adhesive layer having adhesion in a specific range by a measurement process under specific conditions may satisfy desired re-workability and durability under moisture resistance test conditions. However, since the PDP is presently large-sized up to 80 inches, when separating the PDP filter having the adhesive layer having adhesion in the above range, a worker is easily exhausted and danger of damage to a module increases. Japanese Patent Laid-open Publication No. Hei. 14-372619 discloses an acrylic resin that consists of a mixture comprising a high-molecular-weight material and a low-molecular-weight material having a high glass transition temperature to realize sufficiently reliable adhesion. The above

patent shows durability and reliability, but easy re-workability is not mentioned. Korean Patent No. 0385720 discloses a process of adding a siloxane compound to an acrylic pressure-sensitive adhesive for optical use, thus decreasing initial adhesion, resulting in excellent re-workability. However, this patent suffers because peel strength is still high, to the extent of being unsuitable for use in a large-sized PDP having high performance.

Therefore, the conventional PDP filter having a pressure-sensitive adhesive composition layer has not provided excellent re-workability and high durability and reliability in a state of being attached to the PDP.

## Disclosure of Invention

### Technical Problem

Accordingly, the present invention has been made keeping in mind the above problems occurring in the prior art, and an object of the present invention is to provide a pressure-sensitive adhesive composition and an adhesive sheet, which exhibit excellent re-workability, durability, and reliability.

### Technical Solution

In order to achieve the above object, the present invention provides an acrylic pressure-sensitive adhesive composition, comprising a) 100 parts by weight of an acrylic copolymer containing a hydroxy group without a carboxyl group; b) 0.01~10 parts by weight of a cross-linking agent; and c) 0.01~5 parts by weight of a polyether modified polydimethylsiloxane copolymer having HLB of 4~13 and having a structure of Formula 1 below:

Formula 1

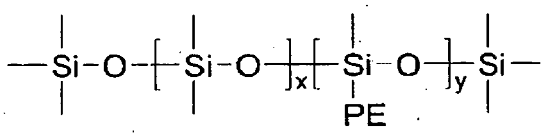

wherein PE is $-CH_2CH_2CH_2O(EO)_n(PO)_mZ$,

n + m is an integer of 1 or more,

EO is ethylene oxide, and PO is propylene oxide, and

Z is hydrogen, an amino group or an alkyl group.

The alkyl group is preferably a linear or branched alkyl group having 1 to 10 carbons.

In addition, the present invention provides an adhesive sheet comprising the acrylic pressure-sensitive adhesive composition.

## Brief Description of the Drawings

FIG. 1 is a view showing the general cross-sectional structure of a PDP;

FIG. 2 is a view showing variations in adhesion depending on a time period of a PDP filter having an adhesive composition layer applied thereon of Example 2 according to the present invention; and

FIG. 3 is a view showing variations in light spectrum of an adhesive film of Example 2 according to the present invention.

## Mode for the Invention

Hereinafter, a detailed description will be given of the present invention.

In an acrylic pressure-sensitive adhesive composition according to the present invention, the acrylic copolymer is preferably prepared from an alkyl(meth)acrylic acid ester monomer having a low glass transition temperature to exhibit flexibility and adhesion, a monomer containing a functional group providing cross-linking site, and optionally a comonomer to exhibit cohesion.

If the alkyl(meth)acrylic acid ester monomer has a long-chain alkyl group, cohesion of the adhesive is reduced. Hence, it is preferred that the alkyl(meth)acrylic acid ester monomer have an alkyl group having 1 to 12 carbons in order to maintain cohesion at high temperatures. Specific examples of the monomer include butyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-octyl(meth)acrylate, n-tetradecyl(meth)acrylate, 2-ethylhexyl(meth)acrylate, etc. These monomers may be used alone or in combinations thereof. In the acrylic comonomer used in the present invention, the repeating unit of the alkyl (meth)acrylic acid ester monomer is preferably used in an amount of 70-99.89 parts by weight, based on 100 parts by weight of the acrylic copolymer.

In order to bestow adhesion and cohesion to the acrylic copolymer, the alkyl(meth)acrylic acid ester monomer may be copolymerized with a comonomer having a high glass transition temperature.

Examples of the copolymerizable comonomer include methyl acrylate, methyl methacrylate, ethyl methacrylate, vinyl acetate, styrene, acrylonitrile, etc. These monomers may be used alone or in combinations thereof. Any monomer may be used as long as it is a copolymerizable monomer having a vinyl group. In the acrylic copolymer used in the present invention, the copolymerizable comonomer component is preferably used in an amount of 0~20 parts by weight, based on 100 parts by weight of the acrylic copolymer.

As the monomer containing a functional group providing cross-linking site, a monomer having a hydroxy group should be used. According to the experiment by the present inventors, it has proved that monomers having a carboxyl group have high adhesion to glass, and thus, peel strength cannot be exhibited to the degree desired in the present invention. Examples of the monomer having a hydroxy group, suitable for use in the present invention, include vinyl monomers, such as 2-hydroxyethyl(meth)acrylate, 2-hydroxypropyl(meth)acrylate, 4-hydroxybutyl(meth)acrylate, 6-hydroxyhexyl(meth)acrylate, 2-hydroxyethyleneglycol(meth)acrylate, 2-hydroxypropyleneglycol(meth)acrylate, etc., but are not limited thereto. In addition, all vinyl monomers having a hydroxy group may be used in the present invention. The above-mentioned components may be used alone or in combinations thereof, if necessary. The vinyl monomer component having a hydroxy group used in the present invention is preferably contained in the acrylic copolymer in an amount of 0.11~10 parts by weight, based on 100 parts by weight of the acrylic copolymer. Thus, the acrylic copolymer usable in the adhesive composition of the present invention is **characterized in that** it does not contain a carboxyl group.

The acrylic copolymer may be prepared through copolymerization of the above-mentioned monomers. Such an acrylic copolymer preferably has a molecular weight of 400,000 to 2,000,000, in consideration of adhesion properties, coatability, etc. A method of preparing the acrylic copolymer is not particularly limited, and preferably includes solution polymerization, photopolymerization, bulk polymerization, suspension polymerization, or emulsion polymerization. Of these processes, a solution polymerization process is most preferable.

In the case where the acrylic copolymer is prepared, the above-mentioned monomers are dissolved in an organic solvent and then polymerized along with an appropriate free radical initiator that is activated by heat or light. The initiator, which is activated by heat, is appropriately exemplified by azo compounds, such as 2,2'-azobis(isobutyronitrile), and peroxide compounds, such as benzoyl peroxide. The initiator, which is activated by light, is appropriately exemplified by benzophenone, benzoin ethyl ether, and 2,2'-dimethoxy-2-phenyl acetophenone.

Further, in order to appropriately control a molecular weight, a chain transfer agent is preferably added. The chain transfer agent is appropriately exemplified by mercaptan compounds, such as dodecyl mercaptan, lauryl mercaptan, etc., $\alpha$-methyl styrene dimers and the like.

The organic solvent used in the solution polymerization should be inert to the above-mentioned monomer and polymer and should not negatively affect the polymerization reaction. Thus, the appropriate solvent includes ethyl acetate, and a mixture of ethyl acetate and toluene, hexane, or propyl alcohol. The polymerization temperature preferably ranges from 50 to 140˚C, and the reaction time preferably ranges from 4 to 10 hours.

In the adhesive composition, the cross-linking agent, which is a polyfunctional cross-linking agent, functions to increase cohesion of the adhesive through the reaction with a hydroxy group. The cross-linking agent is preferably used in an amount of 0.01~10 parts by weight, based on 100 parts by weight of the acrylic copolymer.

If the amount of polyfunctional cross-linking agent is less than 0.01 parts by weight, air bubbles may occur under high temperature conditions. On the other hand, if the above amount exceeds 10 parts by weight, a peeling phenomenon may occur under high temperature and high humidity conditions.

The cross-linking agent includes isocyanates, epoxys, aziridines, metal chelates, etc. Of these cross-linking agents, an isocyanate cross-linking agent is easy to use. Examples of the isocyanate cross-linking agent include toluenediisocyanate, xylenediisocyanate, diphenylmethanediisocyanate, hexamethylenediisocyanate, isophorone diisocyanate, tetramethylxylene diisocyanate, naphthalenediisocyanate, and receoptors thereof with polyols such as trimethylolpropane. In addition, examples of the epoxy cross-linking agent include ethyleneglycoldiglycidylether, triglycidylether, trimethylolpropanetriglycidylether, N,N,N',N'-tetraglycidylethylenediamine, glycerine diglycidylether, etc. Examples of the aziridine cross-linking agent include
N,N'-toluene-2,4-bis(1-aziridinecarboxide),
N,N'-diphenylmethane-4,4'-bis(1-aziridinecarboxide), triethylenemelamine, bisisophthaloyl-1-(2-methylaziridine), tri-1-aziridinylphosphineoxide, etc. Examples of the metal chelate cross-linking agent include coordinated compounds of multivalent metals, such as aluminum, iron, zinc, tin, titanium, antimony, magnesium, vanadium, etc., to acetylacetone or ethyl acetoacetate.

In the adhesive composition, the polyether modified polydimethylsiloxane copolymer having the structure of Formula 1, which is the siloxane compound added to decrease initial adhesion of the acrylic pressure-sensitive adhesive, should preferably have high compatibility with the acrylic copolymer. The polyether modified polydimethylsiloxane copolymer is preferably used in an amount of 0.01~5 parts by weight, based on 100 parts by weight of the acrylic copolymer. If the amount of polyether modified polydimethylsiloxane copolymer is less than 0.01 parts by weight, an initial adhesion decrease effect is insignificant, and thus, re-workability is reduced. On the other hand, if the above amount exceeds 5 parts by weight, compatibility with the acrylic copolymer is deteriorated, and this copolymer is mainly present at the interface between the adhesive layer and glass plate, and thus, is transferred to the surface of the glass plate upon a separation process, and an adhesion increase effect by time lapse becomes insufficient, which is inappropriate for the purpose of the present invention.

The polyether modified polydimethylsiloxane copolymer should have HLB of 4~13 as calculated from Equation 1 below. If the HLB is less than 4, the initial adhesion decrease effect becomes insignificant. On the other hand, if the HLB is larger than 13, the adhesion increase effect by time lapse after the adhesive composition is attached to the glass substrate is insignificant, which is inconsistent with the purpose of the present invention.

[Equation 1]

$$HLB = 20\,(M_H/M)$$

wherein $M_H$ is a molecular weight of a hydrophilic group, and M is a molecular weight of the polyether modified polydimethylsiloxane copolymer.

The molecular weight of polyether modified polydimethylsiloxane copolymer preferably ranges from 300 to 300,000. If the molecular weight is less than 300, since this material is mainly present on the surface of the glass plate under durability conditions, air bubbling and peeling may undesirably occur. On the other hand, if the molecular weight exceeds 300,000, compatibility with the acrylic copolymer is deteriorated.

The acrylic pressure-sensitive adhesive composition may further comprise a silane coupling agent. Thereby, in the case where the adhesive composition adheres to the glass substrate, heat resistance and moisture resistance properties may be further improved, thanks to increased adhesion stability. In particular, the silane coupling agent functions to aid in improving adhesion reliability when the adhesive composition is allowed to stand for a long period under high temperature and high humidity conditions. The silane coupling agent may be used in an amount of 0.005~5 parts by weight based on 100 parts by weight of the acrylic copolymer. Examples of the silane coupling agent compound include vinyltrimethoxysilane, vinyltriethoxysilane, γ-glycidoxypropyltrimethoxysilane, γ-methacryloxypropyltrimethoxysilane, etc. These compounds may be used alone or in combinations thereof.

A method of preparing the acrylic pressure-sensitive adhesive composition is not particularly limited, and may be obtained by mixing the acrylic copolymer, the cross-linking agent and the polyether modified polydimethylsiloxane copolymer according to a typical process.

As such, it is preferred that the cross-linking agent be a polyfunctional cross-linking agent. This polyfunctional cross-linking agent is preferable in that it seldom causes a functional group cross-linking reaction of the cross-linking agent in the course of mixing to form the adhesive layer, in order to conduct a uniform coating process. After the adhesive composition is applied, it is dried and then aged, whereby a cross-linked structure is formed, thus, obtaining an adhesive layer being elastic and having high cohesion. As such, adhesion properties, such as durability and reliability, of adhesive products are improved by virtue of high cohesiveness of the adhesive.

In addition, for the specific purpose of the present invention, the adhesive composition may further comprise a plasticizer, an epoxy resin, and a curing agent, and, also, may be appropriately mixed with a UV stabilizer, an antioxidant, a coloring agent, a reinforcing agent, a filler, etc. for a general purpose.

The acrylic pressure-sensitive adhesive composition of the present invention has adhesion after a lapse of 72 hours or more, which is at least 1.5 times as great as initial adhesion. Thereby, when the PDP filter is attached to the upper glass plate of the PDP, adhesion is initially low, and thus, re-workability is excellent. Adhesion increases over time, as well, thus obtaining a PDP having excellent durability without air bubbling or peeling. The initial adhesion of the composition layer is measured to be preferably 30 gf/25 mm to 900 gf/25mm, more preferably 100 gf/25 mm to 700 gf/25mm, at room temperature, 4 hours after the composition layer is attached to the glass plate.

The acrylic pressure-sensitive adhesive composition of the present invention has low initial adhesion, and thus, a separation process of large-sized PDP filter to the upper plate of PDP module, for example glass plate, is easy to conduct. If adhesion after 72 hours increases by at least 1.5 times, preferably at least 2 times as great as initial adhesion, durability and reliability may be satisfied for a long time period.

Specifically, initial adhesion is measured at 180°and a peeling speed of 300 mm/ min using a Texture analyzer

(Stable Micro Systems), 4 hours after the filter is attached to the glass substrate through once-reciprocal movement of 2 kg of a rubber roller under conditions of 23˚C and 65% R.H. In addition, adhesion after the lapse of 72 hours or more is measured at 180˚and a peeling speed of 300 mm/min using a Texture analyzer (Stable Micro Systems), 72 hours after the filter is attached to the glass substrate through once-reciprocal movement of 2 kg of a rubber roller under conditions of 23˚C and 65% R.H. As in Table 4 and FIG. 2, which show the experimental results of Example 2 of the present invention, the adhesive composition of the present invention has adhesion increasing with the lapse of a time period. Hence, if adhesion after the lapse of 72 hours is at least 1.5 times as great as initial adhesion, adhesion is still at least 1.5 times as great as initial adhesion even after the lapse of such a time period.

Further, the present invention provides an adhesive sheet comprising the adhesive composition mentioned above. The adhesive sheet may be formed by applying the above-mentioned adhesive composition onto a substrate, preferably a release sheet, and drying it.

Preferably, the acrylic pressure-sensitive adhesive composition or adhesive sheet may be applied onto one surface of the PDP filter, more preferably the outermost layer of the PDP filter.

In the present invention, the PDP filter having the inventive acrylic adhesive composition layer applied thereon includes at least one layer selected from the functional film layer group consisting of an antireflection layer, an electromagnetic shielding layer, a near infrared absorption or reflection layer, a neon-cut color-compensation layer, and a layer having at least two function of the above functions.

The electromagnetic shielding layer functions to shield electromagnetic waves occurring upon electrical discharge of plasma. This layer may be prepared by depositing or sputtering a transparent conductive thin film onto a glass plate or transparent substrate. Alternatively, a copper etching mesh or a conductive fiber mesh obtained by coating polyester fiber with copper or nickel through electroless plating may be used as the electromagnetic shielding layer.

The near infrared absorption layer may be used without particular limits as long as transmittance is high in the visible range (380~780 nm) but transmittance is 20% or less in the near infrared range (800~1200 nm). The near infrared absorbent may be formed into a thin film on one surface of the transparent substrate using a binder, or may be mixed and dispersed in the transparent substrate or mixed and dispersed in the pressure-sensitive adhesive composition of the present invention. In particular, in the case where the above absorbent is mixed and dispersed in the pressure-sensitive adhesive composition of the present invention, the functional film lamination may be simplified, and a process yield increase effect may be expected.

The near infrared absorbent includes at least one selected from the group consisting of diimmonium dyes, phthalocyanine dyes, naphthalo cyanine dyes, and metal-complex dyes.

The neon-cut color-compensation layer is preferably composed of a layer including dye having a maximum absorption wavelength from 570 to 600 nm and a half band width of 50 nm or less. The neon-cut color-compensation layer may be obtained by forming a dye having the form of an intramolecular or intermolecular metal-complex into a film on one surface of a transparent substrate using a binder, or by mixing and dispersing the dye in the transparent substrate, or mixing and dispersing the dye in the pressure-sensitive adhesive composition. Color purity may be increased by the neon-cut color-compensation layer.

The neon-cut dye includes at least one selected from the group consisting of porphyrin dyes, cyanine dyes, azo dyes, anthraquinone dyes, and phthalocyanine dyes, etc., having the form of an intramolecular metal-complex.

The functional film layer may be laminated using a general pressure-sensitive adhesive film or using the acrylic pressure-sensitive adhesive composition of the present invention.

A process of forming the adhesive layer on the functional film layer is not particularly limited, and includes directly applying the above adhesive composition onto the surface of the functional film, for example, using a bar coater, and drying it. Alternatively, the adhesive may be applied onto the surface of a peelable substrate constituting a release layer formed of silicon and then dried, after which the adhesive layer formed on the peelable substrate may be transferred to the functional film layer and then aged.

A better understanding of the present invention may be obtained in light of the following examples and comparative examples, which are set forth to illustrate, but are not to be construed to limit the present invention.

<Preparation of Acrylic Copolymer>

In order to prepare an acrylic copolymer, a monomer mixture shown in Table 1 below was loaded as a monomer composition of Table 1 into a 1 L reactor equipped with a cooling system for easily controlling the temperature while refluxing nitrogen gas. As a solvent, 120 parts by weight (based on 100 parts by weight of the acrylic copolymer, which is equally applied to the following examples) of ethylacetate (EAc) was added. To remove oxygen, nitrogen gas was purged for 60 min with the temperature maintained at 60˚C. 0.03 parts by weight of 2,2'-azobis(isobutyronitrile) (AIBN), serving as a reaction initiator, was diluted with ethylacetate to have a concentration of 45%, and then added to the reaction solution. The reaction solution was allowed to react for 8 hours to prepare a final acrylic copolymer. The prepared acrylic copolymer had a conversion rate of 99% or more, and the molecular weight thereof was measured through GPC (Gel permeation chromatography) using polystyrene as a standard material.

<Adhesive Mixing, Coating and Dye Mixing>

To 100 parts by weight of the acrylic copolymer obtained thus, an toluene diisocyanate adduct (TDI-1) of isocyanate trimethylolpropane, serving as a cross-linking agent, and a polyether modified polydimethylsiloxane copolymer were added, as shown in Table 2 below. In consideration of coatability, the resultant composition was diluted to 10 times, uniformly mixed, applied onto release paper and then dried, to obtain a uniform adhesive layer being 25 □ thick. In addition, when the composition was diluted to an appropriate concentration using a solvent, it was blended with a color-compensation dye and then sufficiently mixed, thereby exhibiting a color-compensation effect in the adhesive.

<Fabrication of PDP Filter including Pressure-sensitive Adhesive>

An anti-reflection layer is positioned as the outermost layer of the filter. In addition, an electromagnetic shielding layer, a near infrared absorption layer, and a color-compensation layer may be positioned, regardless of layer sequence, as long as they are present under the antireflection layer. In following examples, the antireflection layer, the near infrared absorption layer, the color-compensation layer, the electromagnetic shielding layer were laminated sequentially. The acrylic pressure-sensitive adhesive layer applied onto the release paper was attached to a layer to be laminated on the upper glass of the PDP, to fabricate a film-type pressure-sensitive adhesive PDP filter. In addition, it is possible to add a color-compensation dye to the acrylic pressure-sensitive adhesive layer. The aging process was conducted for 4 days under conditions of 23˚C and 65% R.H.

<Assay Test>

<u>180˚ Peel Strength</u>

Peel strength varies with the measurement angle and peeling speed. In the present invention, peel strength was measured at 180˚and peeling speed of 300 mm/min using a Texture analyzer (Stable Micro Systems). The pressure-sensitive adhesive PDP filter fabricated according to the present invention was cut to 25 mm x 150 mm, and then attached to glass through once-reciprocal movement of 2 kg of a rubber roller under conditions of 23˚C and 65% R.H. Peel strength was measured at the initial 4 hours and 72 hours after the attachment.

<u>Easy Re-workability</u>

The pressure-sensitive adhesive PDP filter fabricated according to the present invention was cut to 560 mm x 970 mm and then attached to a glass plate (580 mm x 990 mm x 3 mm) through once-reciprocal movement of 2 kg of a rubber roller under conditions of 23˚C and 65% R.H. After the attachment of the PDP filter and standing for initial 4 hours and 72 hours under conditions of 23˚C and 65% R.H., 5 persons each peeled the PDP filter, and judged whether the filter was easily peeled and also observed whether the adhesive layer remained on the glass surface. The criteria for the assay of re-workability are as follows:

○: when the filter can be easily peeled and the adhesive is not transferred to the glass substrate,

Δ: when the filter can be peeled and the adhesive is not transferred to the glass substrate,

×: when the adhesive is transferred to the glass substrate.

<u>Durability and Reliability</u>

The pressure-sensitive adhesive PDP filter fabricated as the above was cut to 560 mm x 970 mm and then attached to a glass plate (580 mm x 990 mm x 3 mm) through once-reciprocal movement of 2 kg of a rubber roller. The test sample was allowed to stand for 1000 hours under conditions of 60˚C and 90% R.H. to assay moisture and heat resistance, after which it was observed whether air bubbling or peeling was generated. For measurement of heat resistance, the sample was allowed to stand at 80˚C for 1000 hours, after which it was whether air bubbling or peeling was generated. Immediately before assaying the state of the sample, the sample was allowed to stand at room temperature for 24 hours. The assay criteria for reliability are as follows.

○: when air bubbling or peeling is not generated,

Δ: when some air bubbling or peeling is generated,

×: when air bubbling or peeling is generated.

<u>Optical Durability and Reliability</u>

The adhesive layer may further comprise a color-compensation dye or a near infrared dye. The adhesive layer having a dye should have no changes in light transmittance under high temperature conditions (80˚C, 500 hours) or high temperature and high humidity conditions (60˚C, 90% R.H., 500 hours). The pressure-sensitive adhesive including the color-compensation dye was laminated between PET films, cut to 10 x 5 cm and then measured for transmittance before and after a high temperature test and a high temperature and high humidity test using a UV3101PC spectrophotometer available from Shimadzu.

[Example 1]

An acrylic copolymer A was used as an acrylic monomer composition, as shown in Table 1 below, and 1.0 part by weight of a polyether modified polydimethylsiloxane copolymer having HLB of 8 (GE Toshiba Silicones L-7500 Silwet ® ), shown in Table 2 below, was added, after which the above-mentioned mixing and coating processes and the PDP filter fabrication process were conducted, and a peeling test and a durability experiment were carried out. The measurement results of 180˚peel strength, re-workability and durability are given in Table 3 below.

[Example 2]

The present example was conducted (without the use of a color-compensation layer among functional film

layers) in the same manner as in Example 1, with the exception that an acrylic copolymer A was used, as shown in Table 1 below, and 0.1 parts by weight of a polyether modified polydimethylsiloxane copolymer having HLB of 8 (GE Toshiba Silicones L-7500 Silwet ® ), shown in Table 2 below, was added, and 0.05 parts by weight of a porphyrin color-compensation dye (Japan Yamada chemical, TAP-2 grade, tetraazaporphyrin dye) was added. The results of 180˚peel strength, re-workability and durability are given in Table 3 below. In addition, in order to determine adhesion varying with a time period, the adhesion of the PDP filter after the lapse of each of 4 hours, 72 hours, 100 hours and 150 hours was measured under the conditions same as those for measuring initial adhesion. The results are given in Table 4 below and FIG. 2. In addition, the results of the light durability experiment are given in Table 5 below and variations in light spectrum of the adhesive film are shown in FIG. 3.

[Comparative Example 1]

A composition obtained by using an acrylic copolymer A prepared with the acrylic monomer composition, as shown in Table 1 below, without the addition of a polyether modified polydimethylsiloxane copolymer, shown in Table 2 below, was subjected to a mixing process and a PDP filter fabrication process, after which a peeling test and a durability experiment were carried out. The measurement results of 180˚peel strength, re-workability, and durability are given in Table 3 below.

[Comparative Example 2]

A composition obtained by using an acrylic copolymer A prepared with the acrylic monomer composition, as shown in Table 1 below, and adding 1.0 parts by weight of a polyether modified polydimethylsiloxane copolymer having HLB of 15 (GE Toshiba Silicones L-7600 Silwet ® ), shown in Table 2 below, was subjected to a mixing process and a PDP filter fabrication process, after which a peeling test and a durability experiment were carried out. The measurement results of 180˚peel strength, re-workability and durability are given in Table 3 below.

[Comparative Example 3]

The present example was conducted in the same manner as in Example 1, with the exception that an acrylic copolymer B having a carboxyl group as a functional group providing cross-linking site, as shown in Table 1 below, was used, and 1.0 parts by weight of a polyether modified polydimethylsiloxane copolymer having HLB of 8 (GE Toshiba Silicones L-7500 Silwet ® ), shown in Table 2 below, was added. The measurement results of 180˚peel strength, re-workability, and durability are given in Table 3 below.

[Comparative Example 4]

A composition obtained by using an acrylic copolymer A prepared with the acrylic monomer composition, as shown in Table 1 below, and adding 1.0 parts by weight of a polyether modified polydimethylsiloxane copolymer having HLB of 3, shown in Table 2 below, was subjected to a mixing process and a PDP filter fabrication process, after which a peeling test and a durability experiment were carried out. The measurement results of 180˚peel strength, re-workability and durability are given in Table 3 below.

Table 1

| Composition of Prepared Copolymer (based on 100 parts by weight of the acrylic copolymer) | | |
|---|---|---|
| Component(wt parts) | Copolymer A | Copolymer B |
| n-BA | 98.5 | 95 |
| 2-HEMA | 1.5 | - |
| AA | - | 5 |
| AIBN | 0.03 | 0.03 |
| DDM | 0.03 | 0.03 |
| EAc | 120 | 120 |
| M.W. | 1600,000 | 1800,000 |
| Note: in Table 1, abbreviations are as follows:<br>n-BA: n-butylacrylate<br>2-HEMA: 2-hydroxyethylmethacrylate<br>AA: acrylic acid<br>AIBN: azobisisobutyronitrile<br>DDM: dodecyl mercaptan<br>EAc: ethylacetate | | |

Table 2

| Components of Pressure-Sensitive Adhesive Composition | | | | |
|---|---|---|---|---|
| No. | Composition (100 wt parts) | Cross-linking Agent(wt parts) | Polyether modified Polydimethylsiloxane Copolymer | |
| | | | HLB | M.W. and Amounts Used (wt parts) |
| Ex. 1 | A | 0.3 | 8 | 3,000 and 1.0 |
| Ex. 2 | A | 0.3 | 8 | 3,000 and 0.1 |
| C.Ex. 1 | A | 0.3 | - | - |
| C.Ex. 2 | A | 0.3 | 15 | 4,000 and 1.0 |
| C.Ex. 3 | B | 0.2 | 8 | 3,000 and 1.0 |
| C.Ex. 4 | A | 0.3 | 3 | 1,000 and 1.0 |

Table 3

| Results of Peel Strength, Re-workability, Durability and Reliability | | | | | |
|---|---|---|---|---|---|
| No. | 180˚Peel Strength (gf/25mm) | | Re-workability | | Durabilit yReliabil ity |
| 4 hr afterAttach. | 72 hr afterAttach. | 4 hr afterAttach. | 72 hr afterAttach. | Heat Resist. | Moisture Resist. |
| Ex. 1 | 70 | 175 | ○ | ○ | ○ |
| Ex. 2 | 700 | 1080 | ○ | ○ | ○ |
| C.Ex. 1 | 950 | 1110 | △ | △ | ○ |
| C.Ex. 2 | 20 | 24 | ○ | ○ | △ |
| C.Ex. 3 | 1160 | 1195 | △ | △ | ○ |
| C.Ex.4 | 910 | 1220 | △ | △ | ○ |

Table 4

| Adhesion varying with Time of PDP Filter of Ex. 2 | | | | |
|---|---|---|---|---|
| Time (hr) | 4 | 72 | 100 | 150 |
| Adhesion (gf/25mm) | 700 | 1080 | 1200 | 1260 |

Table 5

| Results of Light Durability of PDP Filter of Ex. 2 under High Temperature and High Humidity Conditions | | | | | | | |
|---|---|---|---|---|---|---|---|
| | Visible Light Transmittance (%) | | | | | | |
| Waveleng th (nm) | 400 | 450 | 528 | 550 | 593 | 612 | 628 |
| Initial | 74.8 | 78.6 | 63.1 | 54.7 | 26.0 | 57.0 | 78.1 |
| After 500 hr | 73.8 | 77.9 | 62.6 | 54.4 | 26.0 | 56.8 | 77.7 |

As is apparent from Table 3, in Examples 1 and 2 according to the present invention, since initial adhesion

was sufficiently low, a large-sized PDP filter could be easily separated. Also, durability and reliability were good under conditions of heat resistance and moisture and heat resistance. However, in Comparative Example 1, in which the polyether modified polydimethylsiloxane copolymer was not added, it was difficult to separate the filter due to too high initial adhesion. In addition, in Comparative Example 2, in which the polyether modified polydimethylsiloxane copolymer having high HLB was used, the separation process may be too easily conducted due to very low initial adhesion so that initial durability and reliability were poor. Furthermore, the adhesion increase effect after the lapse of a predetermined time period was low, which is inconsistent with the purpose of the present invention. In addition, in Comparative Example 3 using the acrylic copolymer having a carboxyl group, even though the polyether modified polydimethylsiloxane copolymer was added, since initial adhesion was still high, the separation process was not easy to conduct. In Comparative Example 4, in which the polyether modified polydimethylsiloxane copolymer having low HLB was used, the separation process was not easy to conduct due to high initial adhesion.

Also, in Example 2 using the polyether modified polydimethylsiloxane copolymer compound and the porphyrin dye together, re-workability and color-compensation function could be simultaneously exhibited and light properties before and after the durability test were seldom changed.

## Industrial Applicability

As is apparent from the experiment results of Examples 1 and 2, a PDP filter having the adhesive composition layer according to the present invention has low initial adhesion. Thus,-when the filter of the present invention is attached to the upper glass plate of the panel and if a defect occurs, the filter may be easily separated. In addition, since adhesion increases with the lapse of time, air bubbling and peeling do not occur, resulting in good durability and reliability. Further, as it can be seen from the experiment result of Example 2, re-workability and color-compensation function may be simultaneously provided to the adhesive layer.

## Claims

1. An acrylic pressure-sensitive adhesive composition, comprising:

   a) 100 parts by weight of an acrylic copolymer containing a hydroxy group without a carboxyl group;
   b) 0.01~10 parts by weight of a crosslinkging agent; and
   c) 0.01~5 parts by weight of a polyether modified polydimethylsiloxane copolymer having HLB of 4~13 and having a structure of Formula 1 below:

   **Formula 1**

   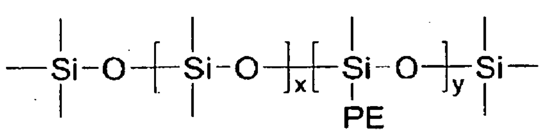

   wherein PE is $-CH_2CH_2CH_2O(EO)_n(PO)_mZ$, n + m is an integer of 1 or more, EO is ethylene oxide, and PO is propylene oxide, and Z is hydrogen, an amino group or an alkyl group.

2. The acrylic pressure-sensitive adhesive composition according to claim 1, wherein adhesion (peeling angle of 180°, and peeling speed of 300 mm/min) after a lapse of 72 hours or more is at least 1.5 times as great as the initial adhesion.

3. The acrylic pressure-sensitive adhesive composition according to claim 1 or 2, wherein the a) acrylic copolymer is prepared from monomers including an alkyl(meth)acrylic acid ester monomer and a monomer containing a functional group providing cross-linking site, which has a hydroxy group without a carboxyl group.

4. The acrylic pressure-sensitive adhesive composition according to claim 3, wherein the alkyl(meth)acrylic acid ester monomer includes an alkyl group having 1 to 12 carbons.

5. The acrylic pressure-sensitive adhesive composition according to claim 3, wherein the alkyl(meth)acrylic acid ester monomer comprises at least one s elected from the group consisting of butyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate,

n-octyl(meth)acrylate, n-tetradecyl(meth)acrylate, and 2-ethylhexyl(meth)acrylate.

**6.** The acrylic pressure-sensitive adhesive composition according to claim 3, wherein the monomer containing a functional group providing cross-linking site, which has a hydroxy group without a carboxyl group, comprises at least one selected from the group consisting of 2-hydroxyethyl(meth)acrylate, 2-hydroxypropyl(meth)acrylate, 4-hydroxybutyl(meth)acrylate, 6-hydroxyhexyl(meth)acrylate, 2-hydroxyethyleneglycol(meth)acrylate, and 2-hydroxypropyleneglycol(meth)acrylate.

**7.** The acrylic pressure-sensitive adhesive composition according to claim 3, wherein the monomers for preparation of the a) acrylic copolymer further comprise at least one selected from the group consisting of methylacrylate, methyl methacrylate, ethyl methacrylate, vinyl acetate, styrene, and acrylonitrile.

**8.** The acrylic pressure-sensitive adhesive composition according to claim 1 or 2, wherein the b) cross-linking agent comprises at least one selected from the group consisting of isocyanate compounds, epoxy compounds, aziridine compounds, and metal chelate compounds.

**9.** The acrylic pressure-sensitive adhesive composition according to claim 1 or 2, wherein the c) polyether modified polydimethylsiloxane copolymer has a molecular weight of 300~300,000.

**10.** The acrylic pressure-sensitive adhesive composition according to claim 1 or 2, further comprising a silane coupling agent.

**11.** An adhesive sheet, which comprises the acrylic pressure-sensitive adhesive composition of claim 1 or 2.

**12.** The adhesive sheet according to claim 11, which comprises a release sheet provided on at least one surface of the adhesive sheet.

**13.** A method of preparing an adhesive sheet, which comprises applying the acrylic pressure-sensitive adhesive composition of claim 1 or 2 onto a substrate and then drying it.

**Patentansprüche**

**1.** Druckempfindliche Klebstoffzusammensetzung auf Acrylbasis, umfassend

(a) 100 Gew.-Teile eines acrylischen Copolymers, enthaltend eine Hydroxygruppe ohne Carboxylgruppe;
(b) 0,01 bis 10 Gew.-Teile eines Vernetzungsmittels; und
(c) 0,01 bis 5 Gew.-Teile eines Polyethermodifizierten Polydimethylsiloxan-Copolymers mit einem HLB-Wert von 4 bis 13 und einer Struktur der folgenden Formel (1):

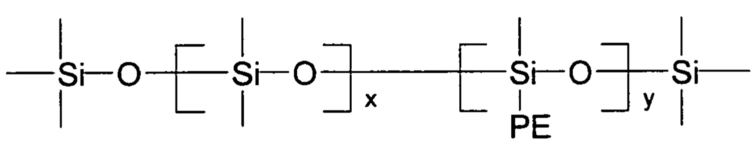

worin
PE $-CH_2CH_2CH_2O(EO)_n(PO)_mZ$ darstellt,
n + m eine ganze Zahl von 1 oder mehr ist,
EO Ethylenoxid ist, und PO Propylenoxid bedeutet, und Z Wasserstoff, eine Aminogruppe oder eine Alkylgruppe ist.

**2.** Druckempfindliche Klebstoffzusammensetzung auf Acrylbasis gemäss Anspruch 1, worin die Adhäsion (Abreisswinkel: 180°, Abreissgeschwindigkeit: 300 mm/min) nach 72 Stunden oder mehr wenigstens 1,5 mal grösser als die anfängliche Adhäsion ist.

**3.** Druckempfindliche Klebstoffzusammensetzung auf Acrylbasis gemäss Anspruch 1 oder 2, worin das acrylische Copolymer (a) hergestellt ist aus Monomeren, umfassend ein Alkyl(meth)acrylsäureestermonomer und ein Monomer, das eine funktionelle Gruppe enthält, die eine Vernetzungsstelle aufweist, enthaltend eine Hydroxygruppe ohne Carboxylgruppe.

**4.** Druckempfindliche Klebstoffzusammensetzung auf Acrylbasis gemäss Anspruch 3, worin das Alkyl(meth)acrylsäureestermonomer eine Alkylgruppe mit 1 bis 12 Kohlenstoffatomen enthält.

**5.** Druckempfindliche Klebstoffzusammensetzung auf Acrylbasis gemäss Anspruch 3, worin das Alkylmethacrylsäureestermonomer wenigstens eine Gruppe umfasst, die ausgewählt ist aus der Gruppe bestehend aus Butyl(meth)acrylat, Ethyl(meth)acrylat, Methyl(meth)acrylat, n-Propyl(meth)acrylat,
Isopropyl(meth)acrylat, t-Butyl(meth)acrylat,
Pentyl(meth)acrylat, n-Octyl(meth)acrylat,
n-Tetradecyl(meth)acrylat und
2-Ethylhexyl(meth)acrylat.

**6.** Druckempfindliche Klebstoffzusammensetzung auf Acrylbasis gemäss Anspruch 3, worin das Monomer, das eine funktionelle Gruppe enthält, die eine Vernetzungsstelle aufweist, enthaltend eine Hydroxylgruppe ohne Carboxylgruppe, wenigstens eine Gruppe umfasst, die ausgewählt ist aus der Gruppe bestehend aus 2-Hydroxyethyl(meth)acrylat,
2-Hydroxypropyl(meth)acrylat,
4-Hydroxybutyl(meth)acrylat,
6-Hydroxyhexyl(meth)acrylat,
2-Hydroxyethylenglykol(meth)acrylat und
2-Hydroxypropylenglykol(meth)acrylat.

**7.** Druckempfindliche Klebstoffzusammensetzung auf Acrylbasis gemäss Anspruch 3, worin die Monomere zur Herstellung des acrylischen Copolymers (a) zusätzlich wenigstens eine Gruppe umfassen, die ausgewählt ist aus der Gruppe bestehend aus Methacrylat, Methylmethacrylat, Ethylmethacrylat, Vinylacetat, Styrol und Acrylnitril.

**8.** Druckempfindliche Klebstoffzusammensetzung auf Acrylbasis gemäss Anspruch 1 oder 2, worin das Vernetzungsmittel (b) wenigstens einen Bestandteil umfasst, der ausgewählt ist aus der Gruppe bestehend aus Isocyanatverbindungen, Epoxyverbindungen, Aziridinverbindungen und Metallchelatverbindungen.

**9.** Druckempfindliche Klebstoffzusammensetzung auf Acrylbasis gemäss Anspruch 1 oder 2, worin das Polyether-modifizierte Polydimethylsiloxan-Copolymer (c) ein Molekulargewicht von 300 bis 300.000 aufweist.

**10.** Druckempfindliche Klebstoffzusammensetzung auf Acrylbasis gemäss Anspruch 1 oder 2, die zusätzlich ein Silan-Kupplungsmittel umfasst.

**11.** Klebefolie, die die druckempfindliche Klebstoffzusammensetzung auf Acrylbasis gemäss Anspruch 1 oder 2 umfasst.

**12.** Klebefolie gemäss Anspruch 11, die eine Freigabefolie umfasst, die auf wenigstens einer der Oberflächen der Klebefolie bereitgestellt ist.

**13.** Verfahren zur Herstellung einer Klebefolie, umfassend das Auftragen der druckempfindlichen Klebstoffzusammensetzung auf Acrylbasis gemäss Anspruch 1 oder 2 auf ein Substrat und anschliessendes Trocknen.

**Revendications**

**1.** Composition acrylique adhésive sensible à la pression, comprenant :

a) 100 parties en poids d'un copolymère acrylique contenant un groupe hydroxy dépourvu de groupe carboxyle ;
b) 0,01 à 10 parties en poids d'un agent de réticulation ; et
c) 0,01 à 5 parties en poids d'un copolymère de polydiméthylsiloxane modifié par un polyéther ayant un système HLB de 4 à 13 et ayant une structure de Formule 1 ci-dessous :

Formule 1

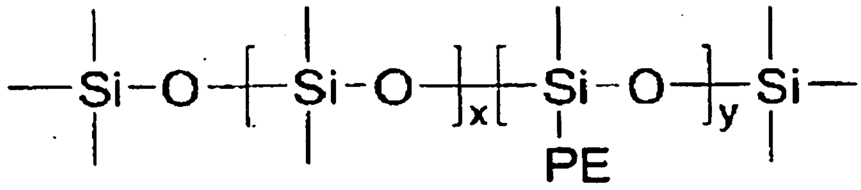

dans laquelle PE est $-CH_2CH_2CH_2O(EO)_n(PO)_mZ$,
n + m est un nombre entier valant 1 ou davantage,
EO est l'oxyde d'éthylène, et PO est l'oxyde de propylène, et
Z est un hydrogène, un groupe amino ou un groupe alkyle.

**2.** Composition acrylique adhésive sensible à la pression selon la revendication 1, dans laquelle l'adhérence (angle de décollement de 180°, et vitesse de décollement de 300 mm/min) après un intervalle de 72 heures ou davantage est au moins 1,5 fois celle de l'adhérence initiale.

**3.** Composition acrylique adhésive sensible à la pression selon la revendication 1 ou 2, dans laquelle le copolymère acrylique de a) est préparé à partir de monomères incluant un monomère ester d'acide alkyl(méth)acrylique et un monomère contenant un groupe fonctionnel procurant un site de réticulation, qui a un groupe hydroxy dépourvu de groupe carboxyle.

**4.** Composition acrylique adhésive sensible à la pression selon la revendication 3, dans laquelle le monomère ester d'acide alkyl(méth)acrylique inclut un groupe alkyle ayant 1 à 12 atomes de carbone.

**5.** Composition acrylique adhésive sensible à la pression selon la revendication 3, dans laquelle le monomère ester d'acide alkyl(méth)acrylique comprend au moins l'un sélectionné dans le groupe constitué par le (méth)acrylate de butyle, le (méth)acrylate d'éthyle, le (méth)acrylate de méthyle, le (méth)acrylate de n-propyle, le (méth)acrylate d'isopropyle, -le (méth)acrylate de t-butyle, le (méth)acrylate de pentyle, le (méth)acrylate de n-octyle, le (méth) acrylate de n-tétradécyle, et le (méth)acrylate de 2-éthylhexyle.

**6.** Composition acrylique adhésive sensible à la pression selon la revendication 3, dans laquelle le monomère contenant un groupe fonctionnel procurant un site de réticulation, qui a un groupe hydroxy dépourvu de groupe carboxyle, comprend au moins l'un sélectionné dans le groupe constitué par le (méth)acrylate de 2-hydroxyéthyle, le (méth) acrylate de 2-hydroxypropyle, le (méth)acrylate de 4-hydroxybutyle, le (méth)acrylate de 6-hydroxyhexyle, le (méth) acrylate de 2-hydroxyéthylène glycol, et le (méth)acrylate de 2-hydroxypropylène glycol.

**7.** Composition acrylique adhésive sensible à la pression selon la revendication 3, dans laquelle les monomères pour la préparation du copolymère acrylique de a) comprennent en outre au moins l'un sélectionné dans le groupe constitué par l'acrylate de méthyle, le méthacrylate de méthyle, le méthacrylate d'éthyle, l'acétate de vinyle, le styrène, et l'acrylonitrile.

**8.** Composition acrylique adhésive sensible à la pression selon la revendication 1 ou 2, dans laquelle l'agent de réticulation de b) comprend au moins l'un sélectionné dans le groupe constitué par des composés isocyanate, des composés époxy, des composés aziridine, et des composés chélates avec un métal.

**9.** Composition acrylique adhésive sensible à la pression selon la revendication 1 ou 2, dans laquelle le copolymère de polydiméthylsiloxane modifié par un polyéther de c) a un poids moléculaire de 300 à 300 000.

**10.** Composition acrylique adhésive sensible à la pression selon la revendication 1 ou 2, comprenant en outre un agent de couplage de type silane.

**11.** Feuille adhésive, qui comprend la composition acrylique adhésive sensible à la pression de la revendication 1 ou 2.

**12.** Feuille adhésive selon la revendication 11, qui comprend une feuille de séparation disposée sur au moins une

surface de la feuille adhésive.

**13.** Procédé de préparation d'une feuille adhésive, qui comprend l'application de la composition acrylique adhésive sensible à la pression de la revendication 1 ou 2 sur un substrat et puis son séchage.

[Fig. 1]

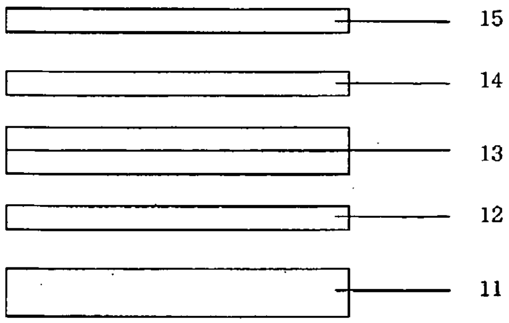
15
14
13
12
11

[Fig. 2]

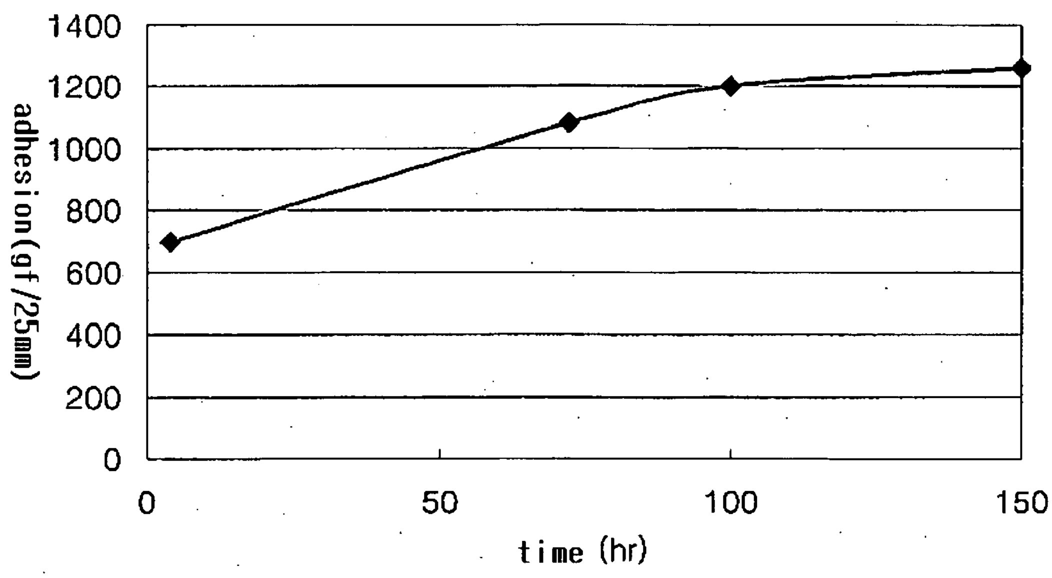
1400
1200
1000
800
600
400
200
0
adhesion(gf/25mm)
0
50
100
150
time (hr)

[Fig. 3]

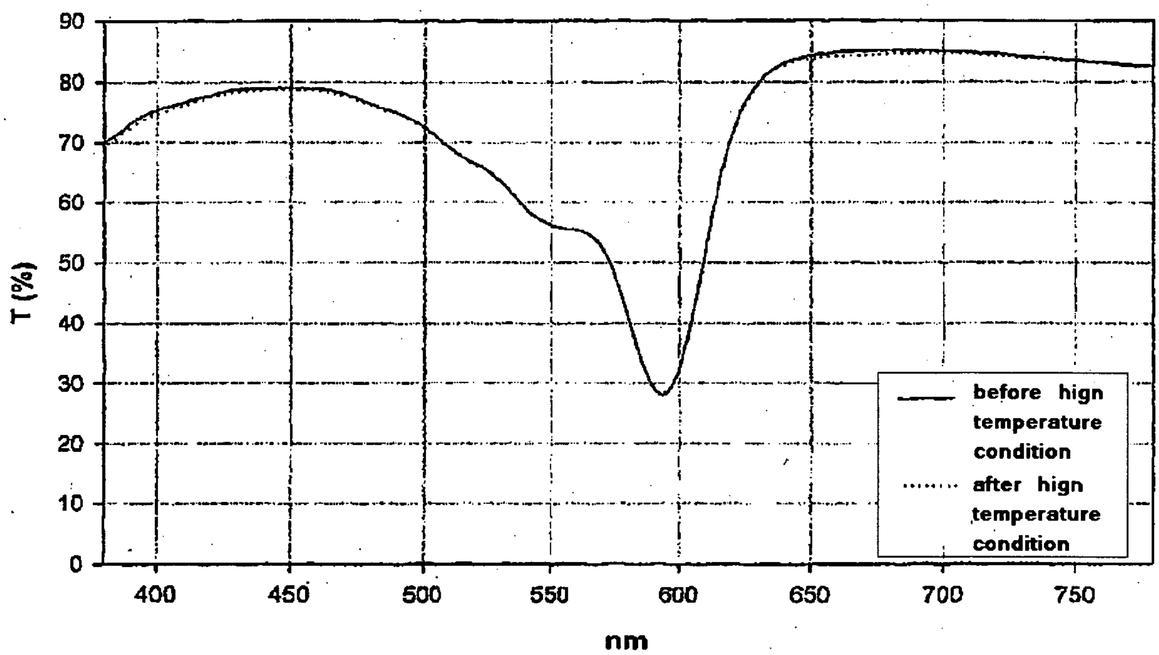

90
80
70
60
50
40
30
20
10
0
T (%)
400
450
500
550
600
650
700
750
nm
before hign temperature condition
after hign temperature condition


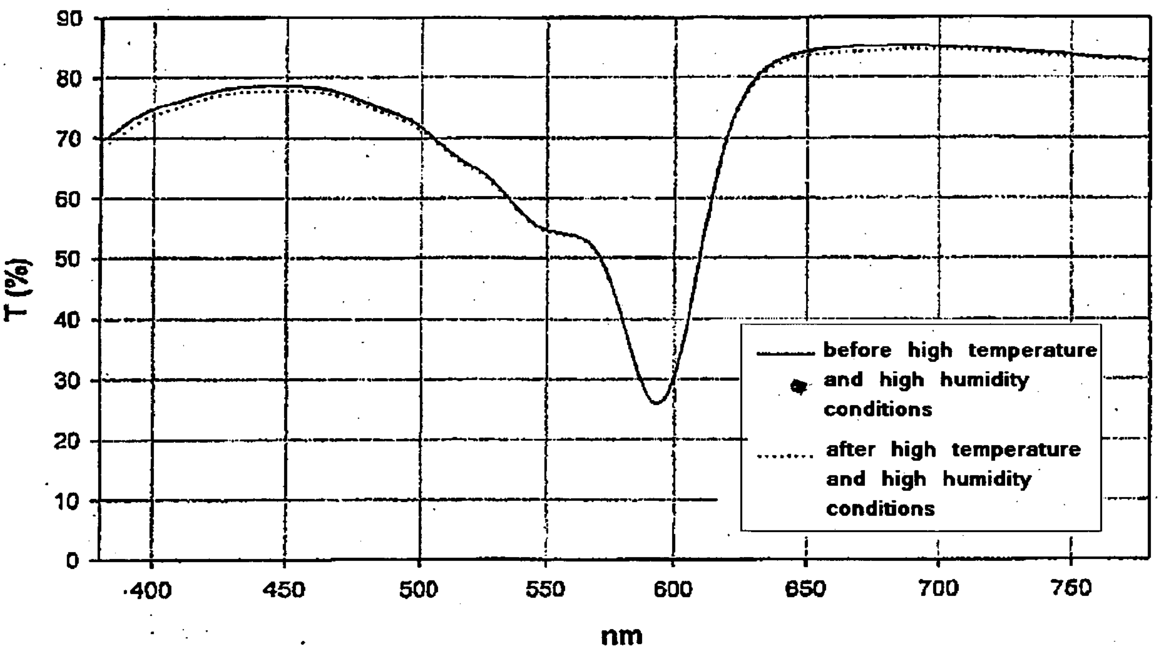

90
80
70
60
50
40
30
20
10
0
T (%)
400
450
500
550
600
650
700
750
nm
before high temperature and high humidity conditions
after high temperature and high humidity conditions

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020050005029
- JP HEI1165464 B
- JP HEI14372619 B
- KR 0385720